(19) Europäisches Patentamt / European Patent Office / Office européen des brevets

(11) EP 1 264 494 B1

(12) **FASCICULE DE BREVET EUROPEEN**

(45) Date de publication et mention de la délivrance du brevet:
**10.12.2008 Bulletin 2008/50**

(21) Numéro de dépôt: **01913994.8**

(22) Date de dépôt: **13.03.2001**

(51) Int Cl.:
*H04Q 7/22* (2006.01)     *H04L 1/00* (2006.01)

(86) Numéro de dépôt international:
**PCT/FR2001/000742**

(87) Numéro de publication internationale:
**WO 2001/069952 (20.09.2001 Gazette 2001/38)**

(54) **PROCEDE D'EMISSION DE SIGNAUX RADIO, RESEAU D'ACCES ET TERMINAL DE RADIOCOMMUNICATION APPLIQUANT LE PROCEDE**

VERFAHREN FÜR DIE AUSSENDUNG VON FUNKSIGNALEN, ZUGANGSNETZ UND FUNKKOMMUNIKATIONSENDGERÄT DAS ENTSPRECHENDE VERFAHREN ANWENDEND

METHOD FOR TRANSMITTING RADIO SIGNALS, RADIO COMMUNICATION ACCESS NETWORK AND TERMINAL USING SAME

(84) Etats contractants désignés:
**AT BE CH CY DE DK ES FI FR GB GR IE IT LI LU MC NL PT SE TR**

(30) Priorité: **15.03.2000 FR 0003308**

(43) Date de publication de la demande:
**11.12.2002 Bulletin 2002/50**

(73) Titulaire: **Nortel Networks Limited St Laurent, Québec H4S 2A9 (CA)**

(72) Inventeurs:
• **LUCIDARME, Thierry F-78180 Montigny-le-Bretonneux (FR)**
• **LESCUYER, Pierre F-78180 Montigny-le-Bretonneux (FR)**

(74) Mandataire: **Ameline, Jean-Paul B.C. et al Alcatel-Lucent Intellectual Property & Standards 54, rue La Boétie 75008 Paris (FR)**

(56) Documents cités:
EP-A- 0 969 682     EP-A- 1 021 053
WO-A-00/11648     WO-A-98/03030
FR-A- 2 782 429     US-A- 6 009 330

## Description

La présente invention concerne le domaine des radiocommunications, et en particulier les techniques permettant de former différents types de canaux dédiés pour l'émission des signaux radio à destination d'une station donnée.

L'invention trouve notamment application dans les réseaux cellulaires de troisième génération du type UMTS (« Universal Mobile Telecommunication System ») utilisant des techniques d'accès multiple à répartition par codes (CDMA, « Code Division Multiple Access »).

Le fait que les informations de signalisation dédiée et le trafic (voix ou données) soit transmis sur l'interface radio avec le même degré d'immunité au bruit est une limitation de certains systèmes de radiocommunication. La couverture radio doit être au moins aussi grande pour la signalisation que pour le trafic. Sinon, il peut se produire des situations indésirables telles que l'impossibilité pour un abonné de mettre un terme à une communication en cours, ou l'impossibilité d'exécuter un transfert de cellule (« handover »), ...

En outre, dans certains cas, comme par exemple lorsqu'un codec adaptatif multi-débit (AMR, « Adaptative Multi-Rate ») est utilisé pour coder de la parole, l'immunité au bruit peut être accrue en augmentant la redondance introduite par le codage de canal et en diminuant de façon correspondante le débit instantané du codeur de source. Dans un tel cas, il est également souhaitable de pouvoir augmenter l'immunité au bruit de la signalisation dédiée.

Le brevet américain 5 230 082 aborde le problème ci-dessus, en ce qui concerne le risque d'impossibilité d'exécution d'un handover lorsqu'un terminal mobile ne parvient plus à capter les informations de signalisation commandant ce handover. Le document propose un mécanisme par lequel une station de base voisine de celle qui desservait précédemment le terminal mobile emprunte la ressource physique de communication pour délivrer au terminal la commande de handover. Ce mécanisme manque de souplesse et requiert une coopération entre les stations de base ainsi qu'un schéma d'allocation dynamique de ressources radio dans l'infrastructure du réseau.

D'autre part, un flux de données d'utilisateur peut contenir des informations de contrôle mélangées au trafic, en particulier des informations de contrôle des couches supérieures du modèle ISO (réseau, transport ou application). Là aussi, il peut être judicieux de protéger davantage les informations de contrôle ou de signalisation par rapport aux données de trafic, ce que ne permettent pas les systèmes actuels.

Un but de la présente invention est de proposer un procédé répondant aux besoins ci-dessus.

L'invention propose ainsi un procédé d'émission de signaux radio à partir d'au moins un flux de données, à destination d'une station de radiocommunication, comprenant les étapes suivantes :

- traiter séparément, dans un étage de contrôle de liaison radio, des premières unités de données contenant des informations d'un type déterminé et des secondes unités de données ne contenant pas d'informations du type déterminé ;
- fournir les unités de données à un étage de contrôle d'accès au médium qui délivre les premières unités de données selon un premier canal de transport dédié et les secondes unités de données selon au moins un second canal de transport dédié ;
- fournir les unités de données délivrées selon lesdits canaux de transport dédiés à un étage de codage et de multiplexage pour former au moins un train de symboles relatif à un canal physique dédié ; et
- fournir chaque train de symboles à un étage d'émission radio,

et dans lequel on commande l'étage de codage et de multiplexage et/ou l'étage d'émission radio de façon à assurer une protection contre le bruit plus grande selon le premier canal de transport dédié que selon le second canal de transport dédié.

Les informations dudit type déterminé sont de préférence des informations relevant d'un protocole de signalisation, les « secondes unités de données » contenant plutôt des données d'utilisateur.

Plusieurs méthodes peuvent être utilisées pour différencier la protection contre le bruit conférée aux différents canaux de transport. On peut ainsi commander l'étage de codage et de multiplexage de façon à appliquer un codage de canal présentant une redondance plus élevée dans le premier canal de transport dédié que dans le second canal de transport dédié.

Dans une réalisation avantageuse, on commande l'étage de codage et de multiplexage de façon à former un premier train de symboles relatif à un premier canal physique dédié à partir du premier canal de transport dédié, et au moins un second train de symboles relatif à un second canal physique dédié à partir d'au moins un second canal de transport dédié.

On peut alors commander l'étage d'émission radio de façon que les signaux radio émis aient une première composante selon le premier canal physique dédié et une seconde composante selon le second canal physique dédié, et que la première composante ait une puissance d'émission plus forte que la seconde composante. Une autre possibilité, lorsque les canaux physiques dédiés sont multiplexés par une technique à étalement de spectre, est de commander l'étage de codage et de multiplexage et l'étage d'émission radio de façon que le premier train de symboles ait un débit de symboles plus faible que le second train de symboles, et que le premier canal physique dédié soit associé à un facteur d'étalement plus élevé que le second canal physique dédié.

Une autre possibilité encore est d'exploiter les récepteurs multiples prévus dans certains terminaux de radiocommunication, notamment pour le fonctionnement en mode de macrodiversité, c'est-à-dire lorsque le terminal communique simultanément avec plusieurs stations de base (voir WO 00/38642). Dans ce dernier cas, on peut émettre les signaux radio depuis au moins deux stations de base, l'étage d'émission radio étant réparti entre lesdites stations de base, en faisant en sorte que les premier et second trains de symboles soient fournis à l'étage d'émission radio dans des stations de base distinctes, afin de former des signaux radio émis selon des trajets de propagation différents.

Dans une réalisation du procédé, l'étage de contrôle de liaison radio reçoit séparément un premier flux de données appartenant à un plan de contrôle, à partir duquel il forme les premières unités de données, et au moins un second flux de données appartenant à un plan d'utilisateur, à partir duquel il forme certaines au moins des secondes unités de données. Les informations du type déterminé peuvent alors comprendre des informations de contrôle de ressources radio et/ou des informations de gestion de mobilité et/ou des informations de contrôle d'appel.

Dans une autre réalisation, l'étage de contrôle de liaison radio reçoit un flux de données appartenant à un plan d'utilisateur, à partir duquel il forme les unités de données, en discriminant les premières et secondes unités de données sur la base d'une analyse dudit flux.

D'autres aspects de la présente invention se rapportent à un réseau d'accès d'un système de radiocommunication et à un terminal de radiocommunication correspondants, qui comprennent un étage de contrôle de liaison radio, un étage de contrôle d'accès au médium, un étage de codage et de multiplexage et un étage d'émission radio, agencés pour mettre en oeuvre un procédé d'émission de signaux radio tel que défini ci-dessus.

D'autres particularités et avantages de la présente invention apparaîtront dans la description ci-après d'exemples de réalisation non limitatifs, en référence aux dessins annexés, dans lesquels :

- la figure 1 est un schéma d'un réseau UMTS auquel l'invention peut s'appliquer ;
- la figure 2 est un diagramme montrant l'organisation en couches de protocoles de communication employés sur l'interface radio du réseau UMTS;
- la figure 3 est un schéma synoptique d'un étage de codage et de multiplexage d'une station de base du réseau ;
- la figure 4 est un schéma synoptique d'un étage d'émission radio de la station de base ;
- la figure 5 est un diagramme illustrant un ensemble de codes de séparation de canaux utilisables dans une cellule du réseau ;
- la figure 6 est un schéma synoptique partiel d'un exemple de réseau d'accès selon l'invention ;
- la figure 7 est un schéma synoptique partiel d'un exemple de terminal de radiocommunication selon l'invention.

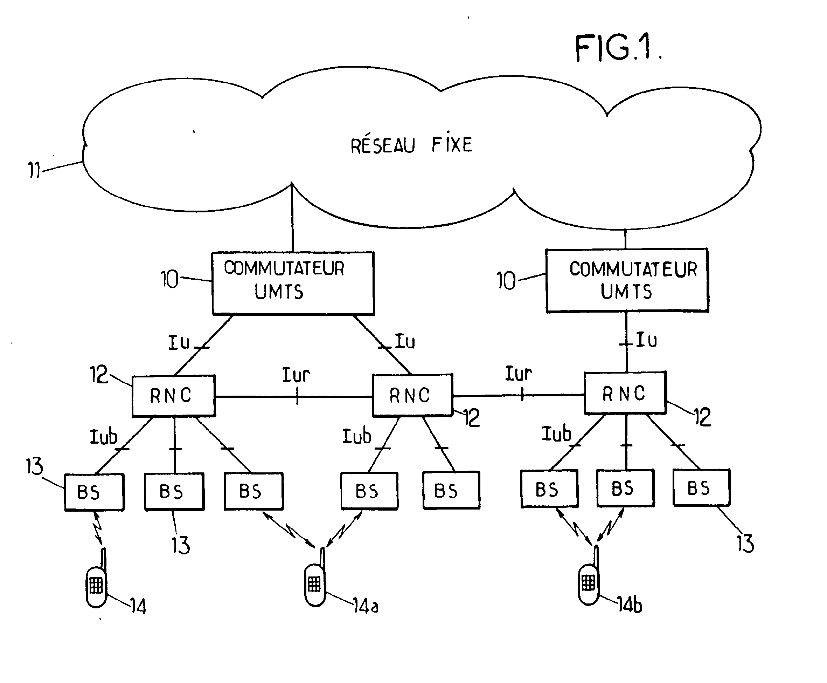

L'invention est décrite ci-après dans son application à un réseau UMTS fonctionnant en mode FDD (duplex à partage fréquentiel). La figure 1 montre l'architecture d'un tel réseau UMTS.

Les commutateurs du service mobile 10, appartenant un coeur de réseau (CN, « Core Network »), sont reliés d'une part à un ou plusieurs réseaux fixes 11 et d'autre part, au moyen d'une interface dite *Iu*, à des équipements de contrôle 12, ou RNC (« Radio Network Controller »). Chaque RNC 12 est relié à une ou plusieurs stations de base 13 au moyen d'une interface dite *Iub*. Les stations de base 13, réparties sur le territoire de couverture du réseau, sont capables de communiquer par radio avec les terminaux mobiles 14, 14a, 14b appelés UE (« UMTS Equipment »). Les stations de base peuvent être regroupées pour former des noeuds appelés « node B ». Certains RNC 12 peuvent en outre communiquer entre eux au moyen d'une interface dite *Iur*. Les RNC et les stations de base forment un réseau d'accès appelé UTRAN (« UMTS Terrestrial Radio Access Network »).

L'UTRAN comporte des éléments des couches 1 et 2 du modèle ISO en vue de fournir les liaisons requises sur l'interface radio (appelée Uu), et un étage 15A de contrôle des ressources radio (RRC, « Radio Resource Control ») appartenant à la couche 3, ainsi qu'il est décrit dans la spécification technique 3G TS 25.301, « Radio Interface Protocol », version 3.2.0 publiée en octobre 1999 par le 3GPP (3rd Generation Partnership Project). Vu des couches supérieures, l'UTRAN agit simplement comme relais entre l'UE et le CN.

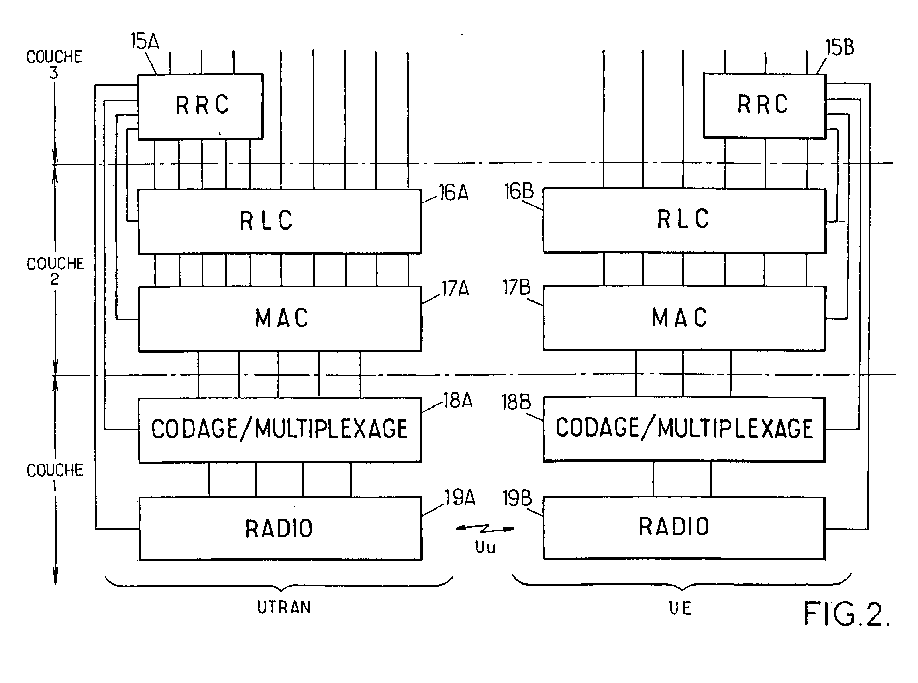

Le figure 2 montre les étages RRC 15A, 15B et les étages des couches inférieures qui appartiennent à l'UTRAN et à un UE. De chaque côté, la couche 2 est subdivisée en un étage 16A, 16B de contrôle de liaison radio (RLC, « Radio Link Control ») et un étage 17A, 17B de contrôle d'accès au médium (MAC, « Medium Access Control »). La couche 1 comprend un étage 18A, 18B de codage et de multiplexage. Un étage 19A, 19B radio assure l'émission des signaux radio à partir des trains de symboles fournis par l'étage 18A, 18B, et la réception des signaux dans l'autre sens.

Il existe différentes façons d'adapter l'architecture de protocoles selon la figure 2 à l'architecture matérielle de l'UTRAN selon la figure 1, et en général différentes organisations peuvent être adoptées selon les types de canaux (voir section 11.2 de la spécification technique 3G TS 25.401, « UTRAN Overall Description », version 3.1.0 publiée en janvier 2000 par le 3GPP). Les étages RRC, RLC et MAC se trouvent dans le RNC 12. Lorsque plusieurs RNC sont impliqués, la sous-couche MAC peut être répartie entre ces RNC, avec des protocoles appropriés pour les échanges sur l'interface Iur, par exemple ATM (« Asynchronous Transfer Mode ») et AAL2 (« ATM Adaptation Layer No. 2 »). Ces mêmes protocoles peuvent également être employés sur l'interface Iub pour les échanges entre la sous-couche MAC et la couche 1. Lors d'échanges en mode de macrodiversité, un RNC peut inclure une partie de la couche 1, se rapportant à des fonctions de macrodiversité.

Les couches 1 et 2 sont chacune contrôlées par la sous-couche RRC, dont les caractéristiques sont décrites dans la spécification technique 3G TS 25.331, « RRC Protocol Specification », version 3.1.0 publiée en octobre 1999 par le 3GPP. L'étage RRC 15A, 15B supervise l'interface radio. Il traite en outre des flux à transmettre à la station distante selon un « plan de contrôle », par opposition au « plan d'utilisateur » qui correspond au traitement des données d'utilisateur issues de la couche 3.

La sous-couche RLC est décrite dans la spécification technique 3G TS 25.322, « RLC Protocol Specification », version 3.1.2 publiée en octobre 1999 par le 3GPP. Dans le sens de l'émission, l'étage RLC 16A, 16B reçoit, suivant des canaux logiques respectifs, des flux de données constitués d'unités de données de service (RLC-SDU) issues de la couche 3. Un module RLC de l'étage 16A, 16B est associé à chaque canal logique pour effectuer notamment une segmentation des unités RLC-SDU du flux en unités de données de protocole (RLC-PDU) adressées à la sous-couche MAC et comprenant un en-tête RLC. Dans le sens de la réception, un module RLC effectue inversement un réassemblage des unités RLC-SDU du canal logique à partir des unités de données reçues de la sous-couche MAC.

La sous-couche MAC est décrite dans la spécification technique 3G TS 25.321, « MAC Protocol Specification », version 3.1.0 publiée en octobre 1999 par le 3GPP. Elle transpose un ou plusieurs canaux logiques sur un ou plusieurs canaux de transport TrCH (« Transport CHannel »). Dans le sens de l'émission, l'étage MAC 17A, 17B peut multiplexer un ou plusieurs canaux logiques dans un même canal de transport. Sur un tel canal de transport, l'étage MAC 17A, 17B délivre des blocs de transport successifs TrBk (« Transport Block ») consistant chacun en un en-tête MAC optionnel et une unité RLC-PDU issue d'un canal logique associé.

Pour chaque TrCH, la sous-couche RRC fournit à la sous-couche MAC un ensemble de formats de transport (TFS, « Transport Format Set »). Un format de transport comprend un intervalle de temps de transmission TTI (« Transmission Time Interval ») égal à 10, 20, 40 ou 80 ms, une taille de bloc de transport, une taille d'ensemble de blocs de transport et des paramètres définissant le schéma de protection à appliquer dans le TrCH par la couche 1 pour détecter et corriger les erreurs de transmission. En fonction du débit courant sur le ou les canaux logiques associés au TrCH, l'étage MAC 17A, 17B sélectionne un format de transport dans le TFS assigné par la sous-couche RRC, et il délivre dans chaque TTI un ensemble de blocs de transport conformément au format sélectionné, en indiquant ce format à la couche 1.

La couche 1 peut multiplexer plusieurs TrCH sur un canal physique donné. Dans ce cas, la sous-couche RRC assigne un ensemble de combinaisons de formats de transport (TFCS, « Transport Format Combination Set ») au canal physique, et la sous-couche MAC sélectionne dynamiquement une combinaison de formats de transport dans cet ensemble TFCS, ce qui définit les formats de transport à utiliser dans les différents TrCH multiplexés.

L'UMTS utilise la technique CDMA d'étalement de spectre, c'est-à-dire que les symboles transmis sont multipliés par des codes d'étalement constitués d'échantillons appelés « chips » dont la cadence (3,84 Mchip/s dans le cas de l'UMTS) est supérieure à celle des symboles transmis. Les codes d'étalement distinguent différents canaux physiques PhCH (« Physical CHannel ») qui sont superposés sur la même ressource de transmission constituée par une fréquence porteuse. Les propriétés d'auto- et d'intercorrélation des codes d'étalement permettent au récepteur de séparer les PhCH et d'extraire les symboles qui lui sont destinés. Pour l'UMTS en mode FDD sur la liaison descendante, un code de brouillage (« scrambling code ») est alloué à chaque station de base, et différents canaux physiques utilisés par cette station de base sont distingués par des codes de canal (« channelisation codes ») mutuellement orthogonaux. La station de base peut aussi utiliser plusieurs codes de brouillage mutuellement orthogonaux. Sur la liaison montante, la station de base utilise le code de brouillage pour séparer les UE émetteurs, et éventuellement le code de canal pour séparer les canaux physiques issus d'un même UE. Pour chaque PhCH, le code d'étalement global est le produit du code de canal et du code de brouillage. Le facteur d'étalement (égal au rapport entre la cadence des chips et la cadence des symboles) est une puissance de 2 comprise entre 4 et 512. Ce facteur est choisi en fonction du débit de symboles à transmettre sur le PhCH.

Les différents canaux physiques sont organisés en trames de 10 ms qui se succèdent sur la fréquence porteuse utilisée par la station de base. Chaque trame est subdivisée en 15 tranches temporelles (« timeslots ») de 666 $\mu$s. Chaque tranche peut porter les contributions superposées d'un ou plusieurs canaux physiques, comprenant des canaux communs et des canaux dédiés DPCH (« Dedicated Physical CHannel »). La contribution d'un DPCH à une tranche temporelle en mode FDD comporte :

- un certain nombre de symboles pilotes placés à la fin de la tranche. Connus a priori du destinataire, ces symboles lui permettent d'acquérir la synchronisation et d'estimer des paramètres utiles à la démodulation du signal ;
- une indication de combinaison de formats de transport TFCI (« Transport Format Combination Indicator »), placée au début de la tranche ; ce TFCI est issu de la sous-couche MAC ;
- une commande de puissance d'émission TPC (« Transmit Power Control ») à utiliser par le destinataire sur la liaison de sens inverse ; cette commande est issue d'un module de contrôle de puissance de la couche 1 qui utilise des paramètres d'asservissement issus de la sous-couche RRC ;

- deux champs de données, notés DATA1 et DATA2, placés de part et d'autre du champ TPC.

Le DPCH peut ainsi être vu comme réunissant un canal physique dédié pour le contrôle, ou DPCCH (« Dedicated Physical Control CHannel »), correspondant aux champs TFCI, TPC et PL, et un canal physique dédié pour les données, ou DPDCH (« Dedicated Physical Data CHannel »), correspondant aux champs DATA1 et DATA2.

Il est possible, pour une même communication, d'établir plusieurs DPCH correspondant à des codes de canal différents, dont les facteurs d'étalement peuvent être égaux ou différents. Cette situation est notamment rencontrée lorsqu'un DPDCH ne suffit pas à fournir le débit de transmission requis par l'application. Dans la suite, on note Y le nombre, égal ou supérieur à 1, de canaux physiques utilisés pour une même communication dans un sens.

Par ailleurs, cette même communication peut utiliser un ou plusieurs canaux de transport. Des TrCH multiplexés sont par exemple utilisés pour des transmissions multimédia, dans lesquelles des signaux de natures différentes à transmettre simultanément requièrent des caractéristiques de transport différentes, notamment en matière de protection contre les erreurs de transmission. D'autre part, certains codeurs peuvent délivrer, pour représenter un signal donné (par exemple audio), plusieurs flux de symboles ayant des importances perceptuelles différentes et requérant donc des degrés de protection différents. On utilise alors des TrCH multiples pour transporter ces différents flux de symboles. Dans la suite, on note X le nombre, égal ou supérieur à 1, de canaux de transport utilisés pour une communication donnée sur les Y canaux physiques précités.

Pour chaque canal de transport i $(1 \leq i \leq X)$, le TTI est composé de $F_i$ trames consécutives, avec $F_i$ = 1, 2, 4 ou 8. De façon typique, on utilise un TTI d'autant plus court que le signal véhiculé par le canal de transport doit être reçu avec un faible retard. Par exemple, un TTI de 10 ms ($F_i$ = 1) sera utilisé pour une application de téléphonie, tandis qu'un TTI de 80 ms ($F_i$ = 8) pourra être utilisé pour une application de transmission de données.

Le codage et le multiplexage des X flux de symboles d'information issus des TrCH sur les Y PhCH sont décrits en détail dans la spécification technique 3G TS 25.212, « Multiplexing and channel coding (FDD) », version 3.0.0 publiée en octobre 1999 par le 3GPP.

Dans le sens de l'émission, l'étage 18A, 18B multiplexe les flux $a_i$ $(1 \leq i \leq X)$ relatifs aux X TrCH utilisés dans une communication, pour former ce qu'on appelle un canal de transport composite codé, ou CCTrCH (« Coded Composite Transport CHannel »), qui est ensuite subdivisé en un ou plusieurs canaux physiques PhCH#j $(1 \leq j \leq Y)$ sur lesquels sont transmis des flux synchronisés de symboles respectivement notés $r_j$.

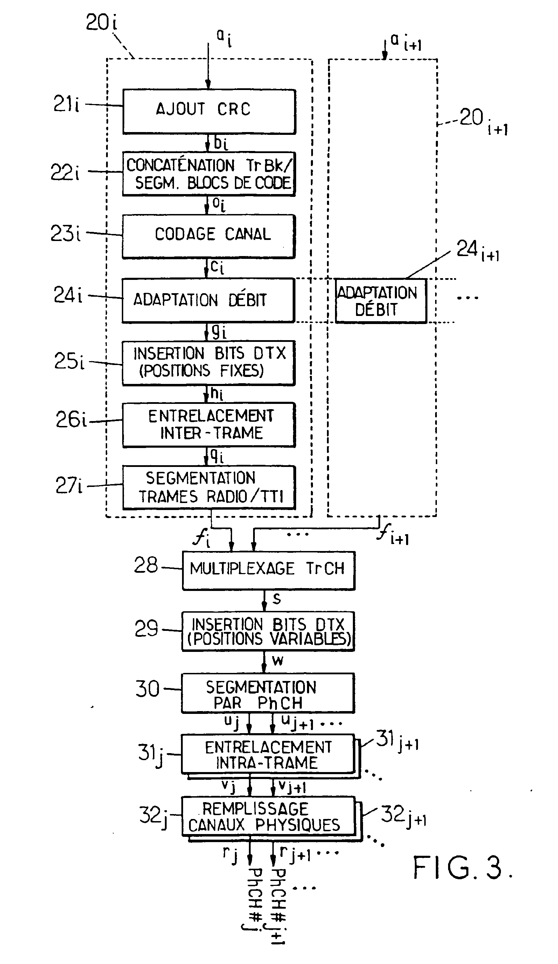

L'étage de codage et de multiplexage 18A est décrit en référence à la figure 3 dans le sens de l'émission depuis l'UTRAN vers un UE. Une structure similaire est prévue dans le sens montant (voir spécification 3G TS 25.212). Les références portant l'indice i désignent les éléments se rapportant au TrCH i $(1 \leq i \leq X)$, les références portant l'indice j désignent les éléments se rapportant au PhCH j $(1 \leq j \leq Y)$, et les références sans indice se rapportent aux opérations effectuées pour chaque trame au niveau CCTrCH.

Les caractéristiques du format de transport sont fournies au bloc de codage $20_i$ par l'étage MAC 17A. Le flux $a_i$ à transmettre sur chaque TrCH i est composé des TrBk successifs. Le module $21_i$ complète chaque TrBk en y ajoutant un code de redondance cyclique CRC, servant à détecter d'éventuelles erreurs de transmission. Les TrBk $b_i$ sont ensuite concaténés et/ou segmentés par le module $22_i$ pour former des blocs $o_i$ de taille appropriée pour l'entrée du codeur de canal $23_i$.

Pour chaque TTI du canal de transport i, le codeur de canal $23_i$ délivre une séquence $c_i$ de $E_i$ bits codés notés $c_{i,m}$ $(1 \leq m \leq E_i)$. Deux types de code correcteur d'erreurs peuvent être appliqués par le module $23_i$

- un code convolutif de rendement 1/2 ou 1/3 et de longueur de contrainte K = 9;
- un turbocode de rendement 1/3 pour les applications requérant les taux d'erreurs les plus faibles.

Les modules $24_i$ d'adaptation de débit (« rate matching ») suppriment (poinçonnent) ou répètent des bits des séquences $c_i$ afin d'adapter le débit binaire des TrCH au débit global admissible sur le ou les PhCH compte tenu de leurs facteurs d'étalement.

Les paramètres du CRC, du codage de canal et de l'adaptation de débit sont définis dans le format de transport.

Dans une trame donnée, les périodes consacrées aux différents TrCH de la communication peuvent avoir des positions fixes (avant l'entrelacement intra-trame évoqué ci-après) ou des positions variables. Dans le cas des positions fixes, il peut être nécessaire d'adjoindre à la séquence $g_i$ délivrée par le module $24_i$, au moyen du module $25_i$, un ou plusieurs symboles marqués, appelés bits de DTX (« Discontinuous Transmission »), qui ne seront pas transmis.

Le module d'entrelacement $26_i$ effectue une permutation de la séquence $h_i$ délivrée par le module $25_i$, en vue de distribuer les symboles relevant du TTI sur les $F_i$ trames qu'il couvre. Cet entrelacement consiste à écrire successivement les symboles de la séquence $h_i$ dans les lignes d'une matrice comportant $F_i$ colonnes, à permuter les colonnes de la matrice, puis à lire les symboles de la matrice colonne après colonne pour former la séquence notée $q_i$. Le module $27_i$ découpe ensuite la séquence $h_i$ en $F_i$ segments de symboles consécutifs correspondant aux $F_i$ colonnes de la matrice d'entrelacement après permutation, et affecte respectivement ces segments aux $F_i$ trames du TTI pour former une séquence notée $f_i$ pour chaque trame et chaque TrCH i ($1 \leq i \leq X$).

Les séquences $f_i$ produites pour les différents TrCH de la communication ($1 \leq i \leq X$) sont multiplexées, c'est-à-dire placées les unes à la suite des autres, par un module 28 formant une séquence s de S symboles pour le CCTrCH. Dans le cas où les périodes consacrées aux différents TrCH de la communication ont des positions variables, il peut être nécessaire d'adjoindre à la séquence s, au moyen du module 29, un ou plusieurs bits de DTX.

Le module 30 découpe ensuite la séquence w délivrée par le module 29 en Y segments de $U_1$, $U_2$, .... $U_Y$ symboles consécutifs, et affecte respectivement ces segments aux Y PhCH pour former une séquence notée $u_j$ pour chaque PhCH j ($1 \leq j \leq Y$). Le module d'entrelacement $31_j$ effectue une permutation de la séquence $u_j$, en vue de distribuer les symboles, au sein de la trame courante, sur les Y PhCH employés par la communication. Cet entrelacement consiste à écrire successivement les symboles de la séquence $u_j$ dans les lignes d'une matrice comportant trente colonnes, à permuter les colonnes de la matrice, puis à lire les symboles de la matrice colonne après colonne pour former la séquence de $U_j$ symboles notée $v_j$.

Le module $32_j$ de remplissage du canal physique (« physical channel mapping ») distribue finalement les symboles successifs de la séquence $v_j$ dans les champs DATA1 et DATA2 des tranches temporelles de la trame courante. Le module $32_j$ complète en outre le train de symboles $r_j$ délivré par l'étage 18A, en insérant les bits de signalisation adéquats dans les champs PL, TFCI et TPC du DPCCH.

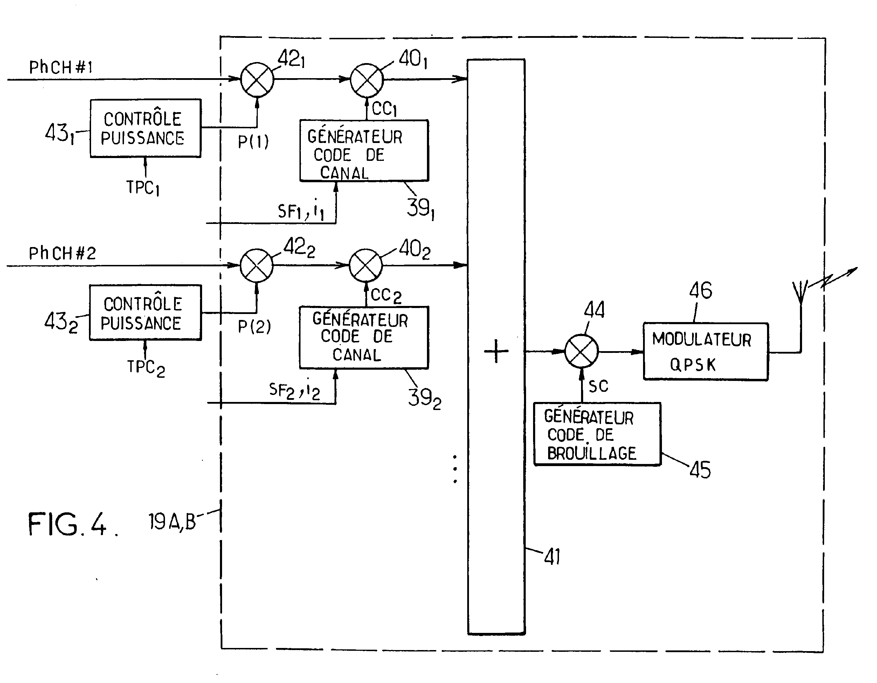

La figure 4 illustre l'organisation de l'étage d'émission radio 19A, 19B d'une station de base 13 ou d'un UE 14, qui multiplexe les PhCH par la technique CDMA. Les informations à émettre sur un PhCH j font l'objet d'un premier étalement par le code de canal $CC_j$.

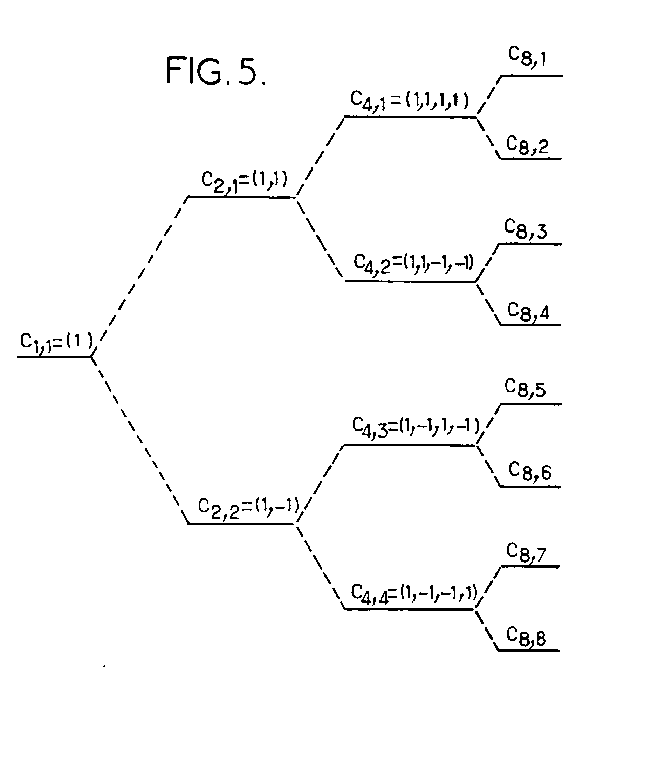

Les codes de canal $CC_j$ sont des codes orthogonaux à facteur d'étalement variable (OVSF). Ils sont choisis dans un ensemble de codes du type de l'arbre représenté sur la figure 5. Chaque code $c_{SF,i}$ ($1 \leq i \leq SF$) est une séquence de SF chips, prenant chacun la valeur $\pm 1$, avec $SF = 2^{L-k}$, L étant un entier positif (égal à 8 dans le cas de l'UMTS) et k une variable entière telle que $0 \leq k \leq L$. L'arbre est défini par :

$$c_{1.1} = (1),$$

$$c_{2\,SF,2i-1} = (c_{SF,i},\ c_{SF,i}),$$

$$c_{2.SF,2i} = (c_{SF,i},\ -c_{SF,i}).$$

Les chips d'un code de canal $c_{SF,i}$ modulent, à la cadence D = 3,84 Mchip/s, des trains de symboles dont la cadence est de $D/SF = 2^{k-L}.D$, c'est-à-dire que le facteur d'étalement vaut $SF = 2^{L-k}$. Les symboles en question sont des symboles complexes comprenant chacun deux bits signés (de valeur $\pm 1$) correspondant à une voie I et à une voie Q.

Les codes de canal sont attribués par la sous-couche RRC. Les codes alloués sont choisis de façon à être globalement orthogonaux pour un même émetteur. Avec l'arbre de codes de la figure 5, deux codes ayant le même facteur d'étalement sont toujours orthogonaux, la somme des produits chip à chip étant nulle. Deux codes de facteurs d'étalement $2^{L-k}$ et $2^{L-k'}$ sont orthogonaux si, après qu'ils ont module deux séquences quelconques de bits signés de cadences respectives $2^{k-L}.D$ et $2^{k'-L}.D$, les séquences de chips résultantes sont orthogonales. Avec la disposition en arbre de la figure 5, ceci revient à dire que deux codes de canal sont orthogonaux si et seulement si ils n'appartiennent pas à une même branche de l'arbre, allant de la racine $c_{1.1}$ à une feuille $c_{L,i}$. La sélection des codes par la sous-couche RRC obéit à cette contrainte de façon globale : l'ensemble des codes de canal $CC_j$ utilisés au même instant par l'émetteur est tel qu'on ne trouve pas deux codes sur la même branche. Ceci permet aux récepteurs de discriminer les canaux qui les concernent.

La sous-couche RRC fournit, pour chaque PhCH j formé par l'étage de codage et de multiplexage 18A, 18B, le facteur d'étalement $SF_j$ et l'indice $i_j$ du code de canal à utiliser Un générateur $39_j$ l'étage 19A, 19B délivre ce code $CC_j = C_{SF_j,i_j}$ à un multiplieur $40_j$ qui module les symboles complexes transmis sur le canal physique correspondant. Les séquences de symboles ainsi modulées sont sommées en 41 pour combiner les canaux d'accès multiples.

Avant le sommateur 41 (en amont ou en aval du multiplieur $40_j$), un autre multiplieur $42_j$ pondère la contribution de chaque PhCH j en lui appliquant un gain P(j) déterminé par un module de contrôle de puissance $43_j$ en fonction de commandes $TPC_j$ retournées dans le DPCCH sur la liaison de sens inverse. Ces commandes $TPC_j$ sont obtenues après une estimation par le récepteur du rapport signal-sur-interféreurs (SIR, « Signal-to-Interferer Ratio ») et comparaison à une valeur de consigne $SIR_{target,j}$ donnée par la sous-couche RRC, selon une procédure d'asservissement décrite dans la spécification technique 3G TS 25.214, « Physical layer procedures (FDD) », version 3.1.1 publiée en décembre 1999 par le 3GPP.

Le signal complexe délivré par le sommateur 41 est multiplié en 44 par le code de brouillage SC fourni par un générateur 45. Le code SC est appliqué identiquement à tous les canaux CDMA, sauf dans le cas d'une station de base utilisant plusieurs codes de brouillage.

En sortie du multiplieur 44, le signal complexe en bande de base est traité par un modulateur 46 opérant la mise en forme des impulsions et une modulation de phase à quatre états (QPSK) pour former le signal radio émis sur l'interface Uu.

La partie réception de l'étage 19A, 19B transpose en bande de base le signal radio capté et amplifié, puis il le multiplie par le code de brouillage et par le code de canal $CC_j$ de chaque PhCH à traiter. Les trains de symboles estimés ainsi récupérés sont soumis à l'étage 18A, 18B qui procède aux opérations de démultiplexage et de décodage duales des opérations décrites en référence à la figure 3, ce qui restitue les TrBk estimés relativement aux différents TrCH. En cas de fonctionnement en mode de macrodiversité, une combinaison des TrBk estimés à la suite de la réception selon différents chemins est effectuée pour réaliser le gain de macrodiversité. L'étage MAC 17A, 17B procède ensuite au démultiplexage des canaux logiques à partir des canaux de transport, puis l'étage RLC 16A, 16B réassemble les flux de données destinés aux couches supérieures.

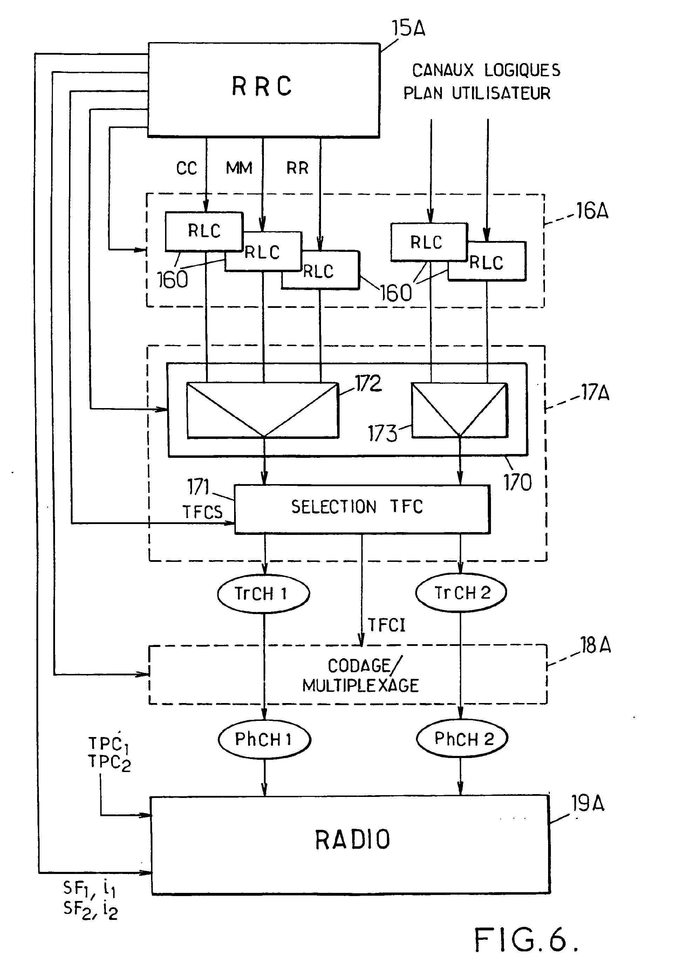

La figure 6 montre schématiquement des entités de l'UTRAN intervenant conformément à une réalisation de l'invention dans la transmission d'informations dédiées vers un UE. On notera qu'une organisation analogue peut être adoptée pour la liaison montante. Dans l'exemple représenté, le plan de contrôle comporte trois canaux logiques pour la transmission d'informations de contrôle d'appel (CC), de gestion de mobilité (MM) et de contrôle des ressources radio (RR), respectivement, à destination de l'entité RRC correspondante de l'UE, et le plan d'utilisateur comporte deux canaux logiques pour la transmission d'informations d'utilisateur. L'étage RRC 15A commande l'étage RLC 16A pour créer une instance de module RLC 160 pour chaque canal logique.

En plus d'autres fonctions non représentées, l'étage MAC 17A comprend, pour les canaux dédiés relatifs à l'UE concerné, un module de commutation de canaux 170 et un module de sélection de combinaison de formats de transport 171. Comme schématisé par les blocs 172, 173, l'étage RRC commande le module 170 pour multiplexer les canaux logiques du plan de contrôle sur un premier canal de transport dédié TrCH 1 et les canaux logiques du plan d'utilisateur sur un canal de transport dédié distinct TrCH 2. En observant les débits sur les canaux logiques associés aux canaux de transport, le module 171 sélectionne la combinaison de formats de transport adéquate parmi le TFCS fourni par l'étage RRC 15A, et délivre l'indication correspondante TFCI à la couche 1.

Le TFCS choisi par l'étage RRC 15A peut, pour chaque combinaison, imposer une redondance plus élevée au codage de canal appliqué au TrCH 1 qu'à celui appliqué au TrCH 2. Par exemple, le turbocode peut être affecté au TrCH 1 tandis qu'un code convolutif est affecté au TrCH 2. La différenciation peut également se faire au niveau de l'adaptation de débit et/ou du CRC.

L'étage RRC 15A commande en outre l'étage de codage et de multiplexage 18A pour que deux canaux physiques (PhCH 1 et PhCH 2) soient utilisés pour transmettre les données respectivement issues des deux TrCH dédiés. Ces deux PhCH j sont reliés à l'étage radio 19A auquel l'étage RRC 15A fournit les paramètres $SF_j$, $i_j$ des codes de canal à utiliser.

Le fait de prévoir des canaux physiques dédiés distincts pour les informations de signalisation et les données d'utilisateur permet d'augmenter la robustesse au bruit des informations de signalisation tout en gérant efficacement les ressources radio. La sous-couche RRC peut notamment attribuer un facteur d'étalement plus élevé au canal PhCH 1 portant les informations de signalisation qu'au canal PhCH 2 portant les données d'utilisateur, ce dernier ayant un débit de symboles plus élevé. En utilisant un seul PhCH, la transmission des mêmes informations aurait requis l'allocation d'un code de canal de facteur d'étalement plus faible, c'est-à-dire plus proche de la racine de l'arbre de la figure 5, ce qui mobilise davantage de ressources de code (par exemple, on voit sur la figure 5 qu'il est moins efficace d'allouer le code $c_{2,1}$ à un PhCH unique de débit global plus élevé que d'allouer respectivement les codes $c_{8,1}$ et $c_{4,2}$ aux canaux PhCH 1 et PhCH 2, ce qui laisse disponible le code $c_{8,2}$ pour un autre utilisateur).

Si la station de base est à court de codes de canal, il est possible de lui allouer un nouveau code de brouillage.

La sous-couche RRC peut commander la robustesse au bruit accrue pour les informations de signalisation en réglant les valeurs de consigne $SIR_{target,1}$, $SIR_{target,2}$ pour le contrôle de puissance sur la liaison descendante. Avec $SIR_{target,1} > SIR_{target,2}$, l'asservissement réalise une puissance d'émission plus élevée sur le PhCH 1 que sur le PhCH 2, par l'intermédiaire des commandes $TPC_1$ et $TPC_2$ retournées sur la liaison montante. Augmenter la puissance d'émission seulement sur le PhCH 1 est meilleur du point de vue des interférences qu'augmenter la puissance d'émission sur un PhCH unique qui porterait la même quantité d'information.

En variante, ou en complément, l'étage RRC 15A de l'UTRAN peut ajuster les niveaux de puissance des canaux PhCH 1 et PhCH 2 directement plutôt que par l'intermédiaire de la boucle d'asservissement utilisant le paramètre $SIR_{target}$.

En mode de macrodiversité, les signaux radio sont émis vers l'UE depuis au moins deux stations de base 13. On peut considérer que la couche 1 est répartie entre ces stations de base (ou node B). Le RNC de desserte (« serving RNC ») peut commander la robustesse au bruit accrue pour les informations de signalisation en orientant le TrCH 1, et donc le PhCH 1 vers la station de base avec laquelle le lien radio est de meilleure qualité et le TrCH 2 / PhCH 2 vers une autre station de base avec laquelle un lien existe. Les récepteurs multiples prévus dans l'UE pour supporter le mode de macrodiversité sont alors utilisés, en renonçant à ce mode, pour recevoir les informations selon des trajets de propagation différents.

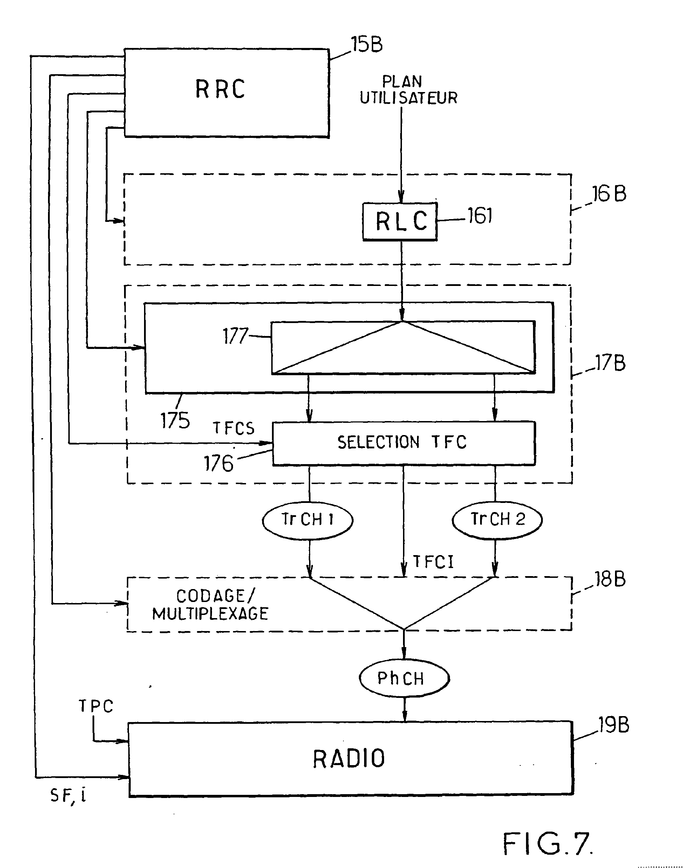

La figure 7 montre schématiquement des entités des couches basses d'un UE intervenant conformément à une réalisation de l'invention dans la transmission d'informations dédiées vers l'UTRAN. On notera qu'une organisation analogue peut être adoptée pour la liaison descendante. Pour simplifier l'exemple, on considère le traitement d'un seul canal logique du plan d'utilisateur, ce canal logique recevant des datagrammes IP de la couche 3. Le flux de datagrammes porte des informations de contrôle mélangées à des données d'utilisateur.

L'étage RRC 15B commande l'étage RLC 16B pour créer une instance de module RLC 161 pour le canal logique, et pour que ce module 161 fasse une discrimination, au moment de la segmentation, entre des premières unités de données RLC-PDU incluant des informations d'un type déterminé (par exemple contrôle) et des secondes unités de données RLC-PDU n'incluant pas d'informations du type déterminé. Le module 161 analyse le flux incident au fil de l'eau et signale à la sous-couche MAC quelles sont les premières et secondes unités RLC-PDU, par exemple au moyen d'un fanion placé dans l'en-tête RLC de chaque unité RLC-PDU, ou au moyen d'un paramètre d'une primitive de communication entre les deux sous-couches.

En plus d'autres fonctions non représentées, l'étage MAC 17B comprend un module de commutation de canaux 175 et un module de sélection de combinaison de formats de transport 176. Comme schématisé par le bloc 177, l'étage RRC commande le module 175 pour séparer le canal logique du plan d'utilisateur en deux canaux de transport dédiés distincts TrCH 1 et TrCH 2. Le TrCH 1 reçoit les premières unités RLC-PDU, tandis que le TrCH 2 reçoit les secondes unités RLC-PDU. Cette séparation est effectuée sur la base des indications fournies par le module 161 avec chaque unité RLC-PDU (en-tête ou primitive). En observant les débits sur les deux canaux de transport dédiés, le module 176 sélectionne la combinaison de formats de transport adéquate parmi le TFCS fourni par l'étage RRC 15B, et délivre l'indication correspondante TFCI à la couche 1.

Le TFCS choisi par l'étage RRC 15B impose, pour chaque combinaison, une redondance plus élevée au codage de canal appliqué au TrCH 1 qu'à celui appliqué au TrCH 2. Par exemple, le turbocode peut être affecté au TrCH 1 tandis qu'un code convolutif est affecté au TrCH 2. La différenciation peut également se faire au niveau de l'adaptation de débit et/ou du CRC.

L'étage RRC 15B commande en outre l'étage de codage et de multiplexage 18B pour que les deux TrCH soient multiplexés sur un seul canal physique. Ce PhCH est relié à l'étage radio 19B auquel l'étage RRC 15B fournit les paramètres SF, i du code de canal à utiliser.

Dans l'exemple de la figure 7, où les canaux de transport dédiés sont regroupés sur un même canal physique, la différenciation de l'immunité au bruit résulte des formats de transport définis par la sous-couche RRC et sélectionnés par la sous-couche MAC. Bien entendu, il serait également possible d'utiliser une méthode similaire à ce qui a été décrit en référence à la figure 6, utilisant plusieurs PhCH.

L'analyse du flux par la sous-couche RLC comprend un examen d'un ou plusieurs en-têtes contenus dans les datagrammes IP, permettant d'identifier les unités de données segmentées qui contiennent les informations recherchées. La nature de ces informations peut dépendre des protocoles utilisés dans les couches supérieures, des applications supportées, de choix de l'opérateur du réseau cellulaire, ...

La discrimination peut par exemple être fondée sur :

- le champ de type de service (TOS) de chaque datagramme IP, en particulier le fanion dit « reliability flag », ce qui peut aider à protéger certains datagrammes IP davantage que d'autres. Pour une description des en-têtes IP, voir « Internet Protocol », Request for Comments (RFC) 791 publiée par l'Internet Engineering Task Force (IETF), septembre 1981 ;

- le champ de type de protocole compris dans l'en-tête IP de chaque datagramme, ce qui permet de protéger des informations de contrôle telles que celles relevant des protocoles ICMP (« Internet Control Message Protocol », RFC 792, IETF, septembre 1981) ou RSVP (« Resource ReSerVation Protocol (RSVP) », RFC 2205, IETF, septembre 1997) davantage que d'autres transmises selon des protocoles servant plutôt au transport de données d'utilisateur, tel UDP (« User Datagram Protocol », RFC 768, IETF, août 1980). On peut ainsi s'assurer que des informations importantes, telles que des indications d'expiration de durée de vie (TTL, « Time To Live) ou de mauvaise adresse de destination de certains datagrammes, sont acheminées dans les meilleures conditions sur l'interface radio ;

- un en-tête de protocole de couche transport tel que TCP (« Transmission Control Protocol », RFC 793, IETF, septembre 1981). On peut ainsi s'assurer que des informations importantes du protocole de transport (par exemple messages d'acquittement ou de réinitialisation) sont acheminées dans les meilleures conditions sur l'interface radio. TCP utilise des temporisations relativement longues (quelques secondes), de sorte que la protection de ces informations de signalisation améliore notablement l'efficacité du protocole ;

- un en-tête de protocole de couche application. Ceci permet par exemple de privilégier des applications de gestion de réseau (protocole SNMP, « A Simple Network Management Protocol (SNMP) », RFC 1157, IETF, mai 1990) ou de transfert de fichier (protocole FTP, « File Transfer Protocol (FTP) », RFC 959, IETF, octobre 1985) par rapport à la navigation web (protocole HTTP, « Hypertext Transfer Protocol », RFC 1945, IETF, mai 1996). Si TCP est utilisé en couche 4, l'indication du protocole d'application peut se trouver dans l'en-tête TCP. Si UDP est utilisé en couche 4, l'indication se trouve dans la partie données. Un autre exemple consiste, dans une application en temps réel telle que la téléphonie sur IP, à privilégier les informations de contrôle par rapport au signal temps réel codé, c'est-à-dire le protocole RTCP par rapport au protocole RTP (voir « RTP : A Transport Protocol for Real-Time Applications », RFC 1889, IETF, janvier 1996).

## Revendications

1. Procédé d'émission de signaux radio à partir d'au moins un flux de données, à destination d'une station de radiocommunication, **caractérisé par** les étapes suivantes :

   - traiter séparément, dans un étage de contrôle de liaison radio (16A, 16B), des premières unités de données contenant des informations d'un type déterminé et des secondes unités de données ne contenant pas d'informations du type déterminé ;
   - fournir les unités de données à un étage de contrôle d'accès au médium (17A, 17B) qui délivre les premières unités de données selon un premier canal de transport dédié et les secondes unités de données selon au moins un second canal de transport dédié ;
   - fournir les unités de données délivrées selon lesdits canaux de transport dédiés à un étage de codage et de multiplexage (18A, 18B) pour former au moins un train de symboles relatif à un canal physique dédié ; et
   - fournir chaque train de symboles à un étage d'émission radio (19A, 19B),

   et dans lequel on commande l'étage de codage et de multiplexage et/ou l'étage d'émission radio de façon à assurer une protection contre le bruit plus grande selon le premier canal de transport dédié que selon le second canal de transport dédié.

2. Procédé selon la revendication 1, dans lequel les informations du type déterminé sont des informations relevant d'un protocole de signalisation.

3. Procédé selon l'une quelconque des revendications précédentes, dans lequel on commande l'étage de codage et de multiplexage (18A, 18B) de façon à appliquer un codage de canal présentant un redondance plus élevée dans le premier canal de transport dédié que dans le second canal de transport dédié.

4. Procédé selon l'une quelconque des revendications précédentes, dans lequel on commande l'étage de codage et de multiplexage (18A, 18B) de façon à former un premier train de symboles relatif à un premier canal physique dédié à partir du premier canal de transport dédié, et au moins un second train de symboles relatif à un second canal physique dédié à partir d'au moins un second canal de transport dédié.

5. Procédé selon la revendication 4, dans lequel on commande l'étage d'émission radio (19A, 19B) de façon que les signaux radio émis aient une première composante selon le premier canal physique dédié et une seconde composante selon le second canal physique dédié, et que la première composante ait une puissance d'émission plus forte que la seconde composante.

6. Procédé selon la revendication 4 ou 5, dans lequel les canaux physiques dédiés sont multiplexés par une technique à étalement de spectre, et dans lequel on commande l'étage de codage et de multiplexage (18A, 18B) et l'étage d'émission radio (19A, 19B) de façon que le premier train de symboles ait un débit de symboles plus faible que le second train de symboles, et que le premier canal physique dédié soit associé à un facteur d'étalement plus élevé que le second canal physique dédié.

7. Procédé selon l'une quelconque des revendications 4 à 6, dans lequel les signaux radio sont émis depuis au moins deux stations de base (13), l'étage d'émission radio (19A) étant réparti entre lesdites stations de base, et dans lequel les premier et second trains de symboles sont fournis à l'étage d'émission radio dans des stations de base distinctes, afin de former des signaux radio émis selon des trajets de propagation différents.

8. Procédé selon l'une quelconque des revendications précédentes, dans lequel l'étage de contrôle de liaison radio (16A, 16B) reçoit séparément un premier flux de données appartenant à un plan de contrôle, à partir duquel il forme les premières unités de données, et au moins un second flux de données appartenant à un plan d'utilisateur, à partir duquel il forme certaines au moins des secondes unités de données.

9. Procédé selon la revendication 8, dans lequel les informations du type déterminé comprennent des informations de contrôle de ressources radio (RR) et/ou des informations de gestion de mobilité (MM) et/ou des informations de contrôle d'appel (CC).

10. Procédé selon l'une quelconque des revendications 1 à 7, dans lequel l'étage de contrôle de liaison radio (16A, 16B) reçoit un flux de données appartenant à un plan d'utilisateur, à partir duquel il forme les unités de données, en discriminant les premières et secondes unités de données sur la base d'une analyse dudit flux.

11. Procédé selon la revendication 10, dans lequel ledit flux de données est composé de datagrammes IP.

12. Procédé selon la revendication 11, dans lequel l'analyse du flux comprend un examen d'un champ de type de service et/ou d'un champ de type de protocole compris dans un en-tête de chaque datagramme IP.

13. Procédé selon la revendication 11 ou 12, dans lequel l'analyse du flux comprend un examen d'un en-tête de protocole de couche transport et/ou d'un en-tête de protocole de couche application inclus dans chaque datagramme IP.

14. Réseau d'accès pour un système de radiocommunication, lequel réseau d'accès comprend un étage de contrôle de liaison radio (16A), un étage de contrôle d'accès au médium (17A), un étage de codage et de multiplexage (18A) et un étage d'émission radio (19A), agencés pour mettre en oeuvre un procédé d'émission de signaux radio selon l'une quelconque des revendications 1 à 13.

15. Terminal de radiocommunication, comprenant un étage de contrôle de liaison radio (16B), un étage de contrôle d'accès au médium (17B), un étage de codage et de multiplexage (18B) et un étage d'émission radio (19B), agencés pour mettre en oeuvre un procédé d'émission de signaux radio selon l'une quelconque des revendications 1 à 13.

**Claims**

1. A method for transmitting radio signals from at least one data stream to a radiocommunication station, said method **characterized by** the following steps:

   - separately processing, within a radio link control stage (16A, 16B), first data units containing information of a determined type, and second data units containing no information of said determined type;
   - providing the data units to a medium access control stage (17A, 17B) that delivers the first data units over a first dedicated transport channel and the second data units over at least one second dedicated transport channel;
   - providing the data units delivered over said dedicated transport channels to a multiplexing and encoding stage (18A, 18B) so as to form at least one symbol sequence related to a dedicated physical channel; and
   - providing every symbol sequence to a radio transmission stage (19A, 198), and wherein the multiplexing and encoding stage and/or the radio transmission stage are controlled in such a way as to ensure noise protection that is greater over the first dedicated transport channel than over the second dedicated transport channel

2. A method according to claim 1, wherein the information of the determined type is information according to a signaling protocol.

3. A method according to any one of the preceding claims, wherein the multiplexing and encoding stage (18A, 18B) is controlled in such a way as to apply a form of channel encoding exhibiting a greater degree of redundancy over the first dedicated transport channel than over the second dedicated transport channel,

4. A method according to any one of the preceding claims, wherein the multiplexing and encoding stage (18A, 18B) is controlled in such a way as to form a first symbol sequence related to a first dedicated physical channel based on the first dedicated transport channel, and at least one second symbol sequence related to a second dedicated physical channel based on at least one second dedicated transport channel.

5. A method according to claim 4, wherein the radio transmission stage (19A, 19B) is controlled in such a way that the transmitted radio signals have a first component sent over the first dedicated physical channel and a second component sent over the second dedicated physical channel, and that the first component has a stronger transmission power than the second component.

6. A method according to claim 4 or 5, wherein the dedicated physical channels are multiplexed using a spread-spectrum technique, and wherein the multiplexing and encoding stage (18A, 18B) and radio transmission stage (19A, 19B) are controlled in such a way that the first symbol sequence has a lower symbol throughput than the second symbol sequence, and that the first dedicated physical channel is associated with a greater spreading factor than the second dedicated physical channel.

7. A method according to any one of the claims 4 to 6, wherein the radio signals are sent from at least two base stations (13), the radio transmission stage (19A) being distributed between said base stations, and wherein the first and second symbol sequences are provided during the radio transmission stage within distinct base stations, in order to form radio signals transmitted over different propagation paths.

8. A method according to any one of the preceding claims, wherein the radio link control stage (16A, 16B) separately receives a first data stream belonging to a control plan, based on which it forms the first data units, and at least one second data stream belonging to a user plan, based on which it forms at least some of the second data units.

9. A method according to claim 8, wherein the information of the determined type comprises radio resource control information (RR) and/or mobility management information (MM) and/or call control information (CC).

10. A method according to any one of the claims 1 to 7, wherein the radio link control stage (16A, 16B) receives a data stream belonging to a user plan, based on which informs the data units, distinguishing the first and second data units from one another based on an analysis of said stream.

11. A method according to claim 10, wherein said data stream is made up of IP datagrams.

12. A method according to claim 11, wherein the flow analysis comprises examining a type of service field and/or a type of protocol field included in a header of each IP datagram.

13. A method according to claim 11 or 12, wherein the flow analysis comprises examining a transport layer protocol header and/or an application layer protocol header included in each IPdatagram.

14. An access network for a radiocommunication system, said access network comprising a radio link control stage (16A), a medium access control stage (17A), a multiplexing and encoding stage (18A), and a radio transmission stage (19A) configured to implement a method for transmitting radio signals according to any one of the claims 1 to 13.

15. A radiocommunication terminal comprising a radio link control stage (16B), a medium access control stage (17B), a multiplexing and encoding stage (18B), and a radio transmission stage (19B) configured to implement a method for transmitting radio signals according to any one of the claims 1 to 13.

**Patentansprüche**

1. Verfahren zum Senden von Funksignalen von mindestens einem Datenfluss an eine Funkverbindungsstation, **gekennzeichnet durch** die folgenden Schritte:

   - Separates Bearbeiten, auf einer Funkverbindungssteuerungsstufe (16A, 16B), der ersten Dateneinheiten, welche informationen eines bestimmten Typs enthalten, und der zweiten Dateneinheiten, welche keine Informationen eines bestimmten Typs enthalten;
   - Liefern der Dateneinheiten an eine Mediumzugriffssteuerungsstufe (17A, 17B), welche die ersten Dateneinheiten gemäß einem ersten dedizierten Transportkanal und die zweiten Dateneinheiten gemäß mindestens einem zweiten dedizierten Transportkanal erstellt:
   - Liefern der gemäß den besagten dedizierten Transportkanälen erstellten Dateneinheiten an eine Codier- und Multiplexstufe (18A, 18B), um mindestens einen einen dedizierten physikalischen Kanal betreffenden Symbolstrom zu bilden; und
   - Liefern jedes Symbolstroms an eine Funksendestufe (19A, 19B),

und wobei man die Codier- und Multiplexstufe und/oder die Funksendestufe so steuert, dass der Geräuschschutz gemäß, dem ersten dedizierten Transportkanal höher ist als der Geräuschschutz gemäß dem zweiten dedizierten Transportkanal.

2. Verfahren nach Anspruch 1, wobei die Informationen eines bestimmtem Typs Informationen sind, welche ein Signalisierungsprotokoll betreffen.

3. Verfahren nach einem beliebigen der vorstehenden Anspruche, wobei man die Codier- und Multiplexstufe (18A,18B) so steuert, dass eine Kanalcodierung angewendet wird, welche eine höhere Redundanz im ersten dedizierten Transportkanal als im zweiten dedizierten Transportkanal aufweist.

4. Verfahren nach einem beliebigen der vorstehenden Ansprüche, wobei man die Codier- und Multiplexstufe (18A, 18B) so steuert, dass ein erster einen ersten dedizierten physikalischen Kanal betreffender Symbolstrom ausgehend von dem ersten dedizierten Transportkanal, und mindestens ein zweiter einen zweiten dedizierten physikalischen Kanal betreffender Symbolstrom ausgehend von mindestens einem zweiten dedizierten Transportkanal gebildet werden.

5. Verfahren nach Anspruch 4, wobei man die Funksendestufe (19A, 19B) so steuert, dass die ausgegebenen Funksignale eine erste Komponente entsprechend dem ersten dedizierten physikalischen Kanal und eine zweite Komponente entsprechend dem zweiten dedizierten physikalischen Kanal aufweisen, und dass die erste Komponente eine stärkere Sendeleistung hat als die zweite Komponente.

6. Verfahren nach Anspruch 4 oder 5, wobei die dedizierten physikalischen Kanäle mittels einer Spreizspektrumstechnik gemultiplext werden, und wobei man die Codier- und Multiplexstufe (18A, 18B) und die Funksendestufe (19A, 19B) so steuert, dass der erste Symbolstrom eine niedrigere Symbolrate hat als der zweite Symbolstrom, und dass der erste dedizierte physikalische Kanal einem höheren Spreizfaktor zugeordnet ist als der zweite dedizierte physikalische Kanal.

7. Verfahren nach einem beliebigen der Ansprüche 4 bis 6, wobei die Funksignale von mindestens zwei Basisstationen (13) ausgesendet werden, wobei die Fünksendestufe (19A) zwischen den besagten Basisstationen verteilt ist, und wobei der erste und der zweite Symbolstrom an die Funksendestufe in verschiedenen Basisstationen bereitgestellt werden, um Funksignale zu bilden, welche entsprechend verschiedenen Propagationswegen gesendet werden.

8. Verfahren nach einem beliebigen der vorstehenden Ansprüche, wobei die Funkverbindungssteuerungsstufe (16A, 16B) separat einen ersten Datenfluss erhält, welcher einer Steuerungsebene angehört, ab welcher die ersten Dateneinheiten gebildet werden, und mindestens einen zweiten Datenfluss erhält, welcher zu einer Benutzerebene gehört, ab welcher mindestens bestimmte der zweiten Dateneinheiten gebildet werden.

9. Verfahren nach Anspruch 8, wobei die Informationen eines bestimmten Typs Funkbetriebsmittelsteuerungsinformationen (RR) und/oder Mobilitätsverwaltungsinformationen (MM) und/oder Verbindungssteuerungsinformationen (CC) umfassen.

10. Verfahren nach einem beliebigen der Ansprüche 1 bis 7, wobei die Funkverbindungssteuerungsstufe (16A, 16B) einen Datenfluss enthält, welcher einer Benutzerebene angehört, ab welcher die Dateneinheiten gebildet werden, unter Diskriminierung der ersten und der zweiten Dateneinheiten auf der Basis einer Analyse des besagten Flusses.

11. Verfahren nach Anspruch 10, wobei der besagte Datenfluss aus IP-Datagrammen besteht.

12. Verfahren nach Anspruch 11, wobei die Analyse des Flusses eine Prüfung eines in einem Header jedes IP-Datagramms enthaltenen Diensttypfeldes und/oder eines Protokolltypfeldes umfasst.

13. Verfahren nach Anspruch 1 oder 12, wobei die Analyse des Flusses eine Prüfung eines in jedem IP-Datagrarnm enthaltenen Protokollheaders der Transportschicht und/oder eines Protokollheaders der Anwehdungsschicht umfasst.

14. Zugangsnetz für ein Funkkommunikationssystem, wobei das Zugangsnetz eine Funkverbindungssteuerungsstufe (16A), eine Mediumzugriffssteuerüngsstufe (17A), eine Codier- und Multiplexstufe (18A) und eine Funksendestufe (19A) umfasst, welche so angeordnet sind, dass ein Funksignalsendeverfahren entsprechend einem beliebigen der Ansprüche 1 bis 13 implementiert werden kann.

15. Funkkommunikationsendgerät, umfassend eine Funkverbindungsstufe (16B), eine Mediumzugriffssteuerungsstufe (17B), eine Codier- und Multiplexstufe (18B) und eine Funksendestufe (198), welche angeordnet sind, um ein Funksignalsendeverfahren nach einem beliebigen der Ansprüche 1 bis 13 zu implementieren.

FIG.1.

RÉSEAU FIXE

11

10 COMMUTATEUR UMTS

10 COMMUTATEUR UMTS

Iu

Iu

Iu

12 RNC

Iur

RNC

Iur

RNC

12

12

Iub

Iub

Iub

13 BS

BS

BS

BS

BS

BS

BS

BS

13

13

13

14

14a

14b

EP 1 264 494 B1

FIG.2.

FIG. 3.

FIG. 4.

FIG. 5.

$C_{1,1}=(1)$

$C_{2,1}=(1,1)$

$C_{2,2}=(1,-1)$

$C_{4,1}=(1,1,1,1)$

$C_{4,2}=(1,1,-1,-1)$

$C_{4,3}=(1,-1,1,-1)$

$C_{4,4}=(1,-1,-1,1)$

$C_{8,1}$

$C_{8,2}$

$C_{8,3}$

$C_{8,4}$

$C_{8,5}$

$C_{8,6}$

$C_{8,7}$

$C_{8,8}$

FIG.6.

FIG.7.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0038642 A

**Littérature non-brevet citée dans la description**

- RTP : A Transport Protocol for Real-Time Applications. *RFC 1889,* Janvier 1996